(19) **Europäisches Patentamt / European Patent Office / Office européen des brevets**

(11) **EP 4 479 716 B1**

(12) **FASCICULE DE BREVET EUROPEEN**

(45) Date de publication et mention de la délivrance du brevet:
**29.04.2026 Bulletin 2026/18**

(21) Numéro de dépôt: **23704065.4**

(22) Date de dépôt: **30.01.2023**

(51) Classification Internationale des Brevets (IPC):
**G01K 7/02** *(2021.01)*      **G01K 17/00** *(2006.01)*

(52) Classification Coopérative des Brevets (CPC):
**G01K 17/00; G01K 7/02**

(86) Numéro de dépôt international:
**PCT/EP2023/052160**

(87) Numéro de publication internationale:
**WO 2023/156178 (24.08.2023 Gazette 2023/34)**

(54) **CAPTEURS POUR SYSTÈMES DE MESURE DE FLUX THERMIQUE À INERTIE**

SENSOREN FÜR SYSTEME ZUR MESSUNG DES TRÄGHEITSWÄRMEFLUSSES

SENSORS FOR SYSTEMS FOR MEASURING INERTIAL HEAT FLUX

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **17.02.2022 FR 2201419**

(43) Date de publication de la demande:
**25.12.2024 Bulletin 2024/52**

(73) Titulaire: **Office National d'Etudes et de Recherches Aérospatiales 91120 Palaiseau (FR)**

(72) Inventeurs:
- **PELLETIER, Nicolas 91120 Palaiseau (FR)**
- **CORATO, Christophe 91120 Palaiseau (FR)**

(74) Mandataire: **Hautier IP 20, rue de la Liberté 06000 Nice (FR)**

(56) Documents cités:
**FR-A1- 2 706 610      US-A1- 2003 198 276**
**US-B2- 9 909 936**

## Description

### Domaine technique de l'invention

La présente description concerne des capteurs pour systèmes de mesure de flux thermique à inertie, des systèmes comprenant lesdits capteurs et des procédés de mesure de flux thermique au moyen desdits systèmes.

### Etat de la technique

La mesure de flux thermique trouve des applications dans de nombreux domaines. Dans le domaine de la micro-électronique, par exemple, une mesure précise des flux thermiques dissipés permet d'optimiser l'architecture des dispositifs comprenant des semi-conducteurs et d'en augmenter le rendement énergétique.

Dans le domaine de l'hydraulique, les procédés complexes comprenant des écoulements turbulents, des écoulements de fluides supercritiques ou encore des transitions de phases telles que l'ébullition, peuvent voir leur fonctionnement optimisé grâce à la caractérisation des flux thermiques mis en jeu. Ceci permet en outre de corriger les modèles utilisés de façon standard, qui sont peu adaptés aux procédés complexes.

Dans le domaine aérospatial, des structures telles que les chambres de combustion de turbomachines ou de moteurs-fusées, les corps de rentrée atmosphérique ou bien même les pas de tir de lanceurs, sont soumises à des flux thermiques forts. Il est ainsi souvent nécessaire de connaître précisément lesdits flux thermiques afin de dimensionner la tenue thermomécanique des structures et d'éviter toute défaillance.

Dans le domaine de la production d'énergie et des procédés de transformation (chimie, sidérurgie, lits fluidisés, ...), le point de fonctionnement des installations est intimement lié à la définition d'un équilibre thermique stable qui nécessite un contrôle en continu des flux thermiques impliqués.

La mesure de flux thermique est généralement réalisée de manière indirecte en se basant sur une mesure d'une grandeur différente du flux, notamment la température d'un élément soumis au flux thermique à mesurer. Cet élément peut être une partie d'un système plus grand, par exemple une paroi métallique d'un réacteur, ou un matériau d'apport.

Parmi les capteurs utilisés pour effectuer une mesure indirecte de flux thermique, il est notamment connu d'utiliser un fluxmètre enthalpique, dont le principe repose sur une mesure de l'élévation de température d'un liquide circulant au travers du corps du fluxmètre. L'élévation de température mesurée permet, à débit donné, d'avoir accès à la puissance thermique absorbée par le liquide et d'obtenir le flux thermique recherché. Ces dispositifs donnent en général des résultats peu précis.

Il est aussi connu d'utiliser les jauges de Gardon, les jauges de Schmidt-Boelter et les thermopiles, qui effectuent une mesure indirecte de flux thermique par l'intermédiaire d'une mesure de différence de température dans un milieu solide compris dans la jauge. Ce type de capteurs est préférentiellement utilisé pour mesurer des flux thermiques radiatifs, c'est-à-dire des flux thermiques mis en jeu par un rayonnement électromagnétique, et a montré ses limites s'agissant de la mesure de flux thermiques convectifs ou mixtes.

Un autre exemple de dispositif remarquable pour mesurer les flux thermiques de manière indirecte est le fluxmètre à inertie, dans lequel un flux thermique est déterminé à partir d'une mesure de l'élévation de température d'un élément de référence, dit élément calorimétrique, lorsque ledit élément calorimétrique est exposé au flux thermique.

La Fig. 1 illustre un fluxmètre à inertie de l'état de l'art tel que divulgué, par exemple, par WO02/18890 A2 [Réf. 1] ou JAYAPRAKASH, C., et al. [Réf. 2]. Un tel fluxmètre à inertie comprend généralement un élément calorimétrique 101 et un élément isolant 102 enveloppant en partie ledit élément calorimétrique 101. Une face de l'élément calorimétrique 101 non-recouverte par l'élément isolant 102, dite face avant 103, est configurée pour recevoir un flux thermique Φ. Le fluxmètre comprend en outre un thermocouple 107 pour la détermination de la température de l'élément calorimétrique 101 soumis au flux thermique Φ. Le thermocouple 107 comprend deux éléments filaires 107a, 107b composés de deux matériaux conducteurs ayant des coefficients de Seebeck différents, lesdits deux éléments filaires 107a, 107b étant reliés en une unique jonction chaude 104 au niveau de laquelle la température de l'élément calorimétrique 101 est mesurée. La jonction chaude 104 est en contact avec une face du fluxmètre opposée à la face avant 103, dite face arrière 106.

Il est connu qu'une différence de potentiel sensiblement proportionnelle à la différence de température existant entre la température au niveau de la jonction chaude 104 et une température de référence au niveau de deux jonctions froides généralement situées aux extrémités des éléments filaires 107a, 107b, apparaît entre les deux éléments filaires 107a, 107b. L'apparition d'une telle différence de potentiel est appelée l'effet Seebeck.

Il est ainsi possible, en mesurant ladite différence de potentiel au moyen d'une unité de mesure 140, de déduire une élévation de la température de la face arrière 106 en fonction du temps. À partir de ladite élévation de température, une unité de traitement 150 peut ainsi calculer le flux thermique Φ en utilisant la théorie de la thermodynamique et des propriétés connues de l'élément calorimétrique 101, comme la masse et la capacité thermique à pression constante.

Le calcul du flux thermique Φ repose cependant sur l'hypothèse d'un élément calorimétrique 101 mince pour que la mesure de température sur la face arrière 106 puisse être considérée comme sensiblement égale à une mesure de température sur la face avant 103.

La demande de brevet publiée FR 2 706 610 [Réf. 3] décrit également un capteur pour système de mesure de flux thermique ; le capteur décrit dans [Réf. 3] comprend deux conducteurs formant un thermocouple, et fixés en des points différents d'une face arrière d'une feuille réalisée en matériau conducteur et d'épaisseur réduite, typiquement inférieure au dixième de millimètre.

Un dispositif tel que décrit dans [Réf. 1], [Réf. 2] ou [Réf. 3] ne permet donc pas de déterminer de façon précise des flux thermique forts, c'est-à-dire des flux thermiques supérieurs ou égaux à quelques $MW/m^2$.

En effet, en présence de flux thermiques forts, l'élément calorimétrique 101 doit être suffisamment robuste pour ne pas fondre durant la durée de mesure, ce qui est en général résolu en augmentant les dimensions de l'élément calorimétrique 101.

Cependant, l'augmentation des dimensions de l'élément calorimétrique 101 entraîne une augmentation de la distance entre la face avant 103 exposée au flux thermique et la face arrière 106 au niveau de laquelle est faite la mesure de température. Ainsi, l'hypothèse d'un élément calorimétrique 101 mince n'est en général plus vérifiée et la précision de la mesure de température est fortement dégradée, ainsi que la précision du flux thermique calculé à partir de ladite température.

Il existe donc un besoin de capteurs pour systèmes de mesure de flux thermique à inertie permettant la mesure précise de flux thermique forts, par exemple des flux thermiques supérieurs ou égaux à quelques $MW/m^2$.

## Résumé de l'invention

Dans la présente description, le terme « comprendre » signifie la même chose que « inclure » ou « contenir », et est inclusif ou ouvert et n'exclut pas d'autres éléments non décrits ou représentés.

En outre, dans la présente description, le terme « environ » ou « sensiblement » est synonyme de (signifie la même chose que) une marge inférieure et/ou supérieure de 10%, par exemple 5%, de la valeur respective.

Selon un premier aspect, la présente description concerne un capteur pour système de mesure de flux thermique à inertie comprenant :

- un élément calorimétrique massif de longueur donnée comprenant une face avant et une face arrière opposée à la face avant, ledit élément calorimétrique ayant une conductivité thermique supérieure ou égale à environ 100 W/(m.K), préférentiellement supérieure ou égale à environ 300 W/(m.K), et une conductivité électrique supérieure ou égale à environ $10^5$ S/m, préférentiellement supérieure ou égale à environ $10^7$ S/m ;
- un élément isolant thermique recouvrant en partie ledit élément calorimétrique de sorte à définir une première portion non-recouverte de l'élément calorimétrique, sensiblement plane, configurée pour être exposée à un flux thermique à mesurer et faisant partie de ladite face avant, et une deuxième portion recouverte de l'élément calorimétrique isolée thermiquement dudit flux thermique ; et
- deux éléments filaires conducteurs traversant, depuis la face arrière, au moins en partie ledit élément calorimétrique et agencés de telle sorte à ne pas être en contact mécanique l'un avec l'autre mais à être en contact électrique par l'intermédiaire dudit élément calorimétrique sur au moins une partie de la longueur de l'élément calorimétrique, les deux éléments filaires conducteurs étant faits dans deux matériaux thermoélectriques différents.

Dans la présente description, un matériau thermoélectrique est un matériau dont la conductivité électrique varie avec la température. Un tel matériau possède, en particulier, une faculté à convertir une énergie thermique en énergie électrique, ladite faculté étant quantifiée par un coefficient de Seebeck.

Dans la présente description, deux matériaux différents sont des matériaux ayant des compositions chimiques distinctes, avantageusement des coefficients de Seebeck différents. Les coefficients de Seebeck de la plupart des matériaux sont connus et accessibles à l'homme du métier dans des tables de référence. Par ailleurs, la mesure des coefficients Seebeck peut être effectuée par des méthodes connues de l'état de la technique, dont une méthode consistant à mesurer la différence de potentiel apparaissant entre un élément fait en un matériau à caractériser et un élément servant de référence, par exemple du platine, lorsque ces deux éléments sont mis en contact mécanique et soumis à une température connue.

Le déposant a montré que l'agencement original des deux matériaux thermoélectriques tel que décrit dans le capteur selon le premier aspect permet de mesurer un flux thermique de façon plus précise que dans l'état de l'art, en particulier lorsqu'il s'agit d'un flux thermique supérieur ou égal à quelques $MW/m^2$.

Selon un ou plusieurs exemples de description, il est avantageux d'utiliser deux matériaux thermoélectriques ayant des coefficients de Seebeck dont la différence est, en valeur absolue, supérieure ou égale à environ 5 $\mu V/K$ pour pouvoir mesurer la température de l'élément calorimétrique avec le capteur selon la présente description. L'utilisation de deux matériaux thermoélectriques ayant des coefficients de Seebeck dont la différence est, en valeur absolue, supérieure ou égale à environ 5 $\mu V/K$ permet en particulier d'obtenir un capteur avec une résolution suffisante pour mesurer la température de l'élément calorimétrique.

Dans la présente description, la longueur de l'élément calorimétrique est définie entre la face avant et la face arrière, selon une direction sensiblement normale à la première portion exposée au flux thermique.

Un flux thermique, exprimé en W/m$^2$, mesuré au niveau de ladite première portion de l'élément calorimétrique, est causé à un instant donné par une différence de température entre la température de l'environnement extérieur au capteur à cet instant et la température de la première portion de l'élément calorimétrique à cet instant. Du fait de ce flux thermique, la température de l'élément calorimétrique augmente au cours du temps.

Le flux thermique comprend généralement une contribution radiative, aussi appelée flux radiatif, et/ou une contribution convective, aussi appelée flux convectif.

Le flux radiatif est dû au rayonnement électromagnétique entre l'environnement extérieur au capteur et la première portion exposée au flux thermique. Le flux convectif est dû aux mouvements de matière dans l'environnement extérieur au capteur au niveau de la première portion.

Le déposant a montré que, dans le capteur selon la présente description, les deux éléments filaires conducteurs traversant au moins en partie l'élément calorimétrique permettent d'effectuer à un instant donné une mesure d'une température moyenne de l'élément calorimétrique, dans lequel ladite température moyenne est une température moyennée sur la partie de l'élément calorimétrique qui est traversée par lesdits deux éléments filaires conducteurs. Cela augmente la précision de la mesure de température de l'élément calorimétrique par rapport aux capteurs de flux thermique à inertie de l'état de l'art.

Ainsi, l'agencement traversant des éléments filaires du capteur selon la présente description permet avantageusement, par exemple, de s'affranchir des incertitudes de mesure de température du calorimètre provenant de l'existence d'un gradient de température entre différentes zones de ladite partie de l'élément calorimétrique traversée par les deux éléments filaires conducteurs.

Le capteur selon le premier aspect résout notamment certains des inconvénients des capteurs de flux thermiques à inertie de l'état de l'art, en particulier des capteurs de flux thermiques à inertie avec thermocouple en face arrière, dont le thermocouple ne permet une mesure de la température de l'élément calorimétrique qu'en un point de l'élément calorimétrique sur la face arrière et dont l'hypothèse d'élément calorimétrique mince n'est donc vérifiée qu'avec des éléments calorimétriques de faible épaisseur, ce qui limite l'utilisation pour des flux thermique forts.

Selon un ou plusieurs exemples, une longueur de l'élément calorimétrique, définie dans une direction sensiblement orthogonale à la face avant, est strictement supérieure à 0,1 mm, avantageusement supérieure ou égale à environ 1 mm, avantageusement supérieure ou égale à environ 2 mm. De manière générale, la longueur pourra être choisie suffisamment grande pour présenter une bonne résistance à l'échauffement lorsque le capteur est soumis à des flux thermiques forts, et suffisamment faible pour satisfaire à l'hypothèse d'un élément calorimétrique thermiquement mince.

Selon un ou plusieurs exemples, lesdits deux éléments filaires conducteurs traversent l'élément calorimétrique sur au moins environ 30% de la longueur de l'élément calorimétrique, préférentiellement 50%, encore plus préférentiellement 90%.

Selon un ou plusieurs exemples, lesdits deux éléments filaires conducteurs traversent l'élément calorimétrique en totalité de sorte à affleurer la première portion de l'élément calorimétrique exposée au flux thermique.

Selon un ou plusieurs exemples, lesdits deux éléments filaires conducteurs sont disposés de façon sensiblement parallèle.

Selon un ou plusieurs exemples, ledit élément calorimétrique présente une forme cylindrique, une forme conique ou une forme cylindro-conique et comprend un axe de révolution, ledit axe de révolution étant sensiblement normal à ladite première portion.

Selon un ou plusieurs exemples, lesdits deux éléments filaires conducteurs sont disposés de façon sensiblement parallèle audit axe de révolution et symétriquement par rapport audit axe de révolution.

Selon un ou plusieurs exemples, ledit élément calorimétrique comprend un matériau ayant :

- une capacité thermique à pression constante supérieure ou égale à environ 120 J/(kg.K) à 25°C ; et/ou
- une température de fusion supérieure ou égale à environ 500°C ; et/ou
- une masse volumique supérieure ou égale à environ 2500 kg/m$^3$.

Selon un ou plusieurs exemples, ledit élément calorimétrique comprend du graphite, un métal, ou un alliage métallique, préférentiellement du cuivre ou l'argent.

Selon un ou plusieurs exemples, lesdits deux matériaux thermoélectriques différents sont un couple de matériaux choisis parmi chromel/constantan, fer/constantan, chromel/alumel, nicrosil/nisil, alliage de nickel-molybdène/alliage de nickel-cobalt (nickel-molybdène/nickel-cobalt), alliage de platine-rhodium/platine (platine-rhodium/platine), alliage de tungstène-rhénium/tungstène (tungstène-rhénium/tungstène).

Selon un ou plusieurs exemples, le capteur comprend en outre un matériau de liaison enrobant chacun des deux éléments filaires conducteurs pour assurer un contact mécanique entre chacun desdits deux éléments filaires conducteurs et ledit élément calorimétrique. Selon un ou plusieurs exemples, ledit matériau de liaison comprend :

- une conductivité électrique supérieure ou égale à environ $10^6$ S/m ; et/ou
- une conductivité thermique supérieure ou égale à environ 200 W/(m.K).

Selon un ou plusieurs exemples, ledit matériau de liaison comprend un matériau choisi parmi l'un au moins des matériaux suivants : argent, or, alliage de cuivre et phosphore, alliage de cuivre et d'argent, alliage de cuivre et de zinc.

Selon un ou plusieurs exemples, l'élément isolant thermique comprend une conductivité thermique inférieure ou égale à environ 2 W/(m.K), préférentiellement inférieure ou égale à environ 0.5 W/(m.K).

Selon un ou plusieurs exemples, l'élément isolant thermique est en particulier un solide choisi de préférence parmi les aérogels, les céramiques poreuses, les ciments réfractaires, les composites ciments-céramiques, les résines époxy, les résines phénoliques, les composites résines-céramiques et le liège technique.

Selon un ou plusieurs exemples, le capteur comprend en outre un échangeur thermique en contact avec une partie de l'élément calorimétrique, ledit échangeur thermique étant configuré pour refroidir l'élément calorimétrique.

Dans une telle configuration, une partie du flux thermique emmagasiné par l'élément calorimétrique est dissipée par l'échangeur thermique, de sorte qu'il est possible d'exposer l'élément calorimétrique à un flux thermique fort, par exemple supérieur ou égale à quelques W/m$^2$, sans que la température de fusion de l'élément calorimétrique soit atteinte. Cela permet donc la mesure d'un flux thermique fort sans contrainte de temps, le point de fusion du matériau formant l'élément calorimétrique n'étant jamais atteint.

Selon un ou plusieurs exemples, la première portion est recouverte au moins partiellement d'un film réflecteur comprenant une émissivité inférieure ou égale à environ 0.1, préférentiellement inférieure ou égale à environ 0.05, dans une gamme de longueur d'onde comprise entre environ 0,5 micromètres et environ 10 micromètres

Selon un ou plusieurs exemples, la première portion est recouverte au moins partiellement d'un film réflecteur comprenant une émissivité inférieure ou égale à environ 0.1, préférentiellement inférieure ou égale à environ 0.05, dans une gamme de longueur d'onde comprise entre environ 0.8 et environ 3 micromètres.

Selon un ou plusieurs exemples, ladite face avant est recouverte au moins partiellement d'un film absorbant comprenant une émissivité supérieure ou égale à 0.9, préférentiellement supérieure ou égale à environ 0.95, dans une gamme de longueur d'onde comprise entre environ 0.5 micromètres et environ 10 micromètres.

Selon un ou plusieurs exemples, ladite face avant est recouverte au moins partiellement d'un film absorbant comprenant une émissivité supérieure ou égale à 0.9, préférentiellement supérieure ou égale à environ 0.95, dans une gamme de longueur d'onde comprise entre environ 0.8 et environ 3 micromètres.

Selon un ou plusieurs exemples, le capteur comprend en outre un hublot configuré pour être disposé entre le flux thermique à mesurer et ledit élément calorimétrique mais n'étant pas en contact mécanique avec ledit film absorbant.

Dans une telle configuration, la contribution convective du flux thermique à mesurer est neutralisée par le hublot, de sorte qu'il est possible d'utiliser le capteur pour mesurer uniquement la contribution radiative du flux thermique.

Selon un ou plusieurs exemples, ledit hublot a une transmission supérieure à environ 0.9, préférentiellement 0.95, dans une gamme de longueur d'onde comprise entre environ 0.8 et environ 3 micromètres.

Selon un ou plusieurs exemples préférés, ledit hublot a une transmission supérieure à environ 0.9, préférentiellement 0.95, dans une gamme de longueur d'onde comprise entre environ 0.5 micromètres et environ 10 micromètres.

Cela permet d'avoir une bonne transmission du flux radiatif depuis l'environnement extérieur au capteur vers la face avant de l'élément calorimétrique.

Selon un deuxième aspect, la présente description concerne un système de mesure de flux thermique à inertie comprenant :

- un capteur selon le premier aspect ;
- des moyens de mesure d'une différence de potentiel entre les deux éléments filaires conducteurs lorsque la première portion de l'élément calorimétrique est exposée à un flux thermique à mesurer ; et
- une unité de traitement configurée pour calculer, à partir de ladite différence de potentiel, une valeur dudit flux thermique.

Selon un troisième aspect, la présente description concerne un procédé de mesure d'un flux thermique au moyen d'un système selon le deuxième aspect :

- l'exposition de la première portion de l'élément calorimétrique du capteur au flux thermique à mesurer ;
- la mesure d'une différence de potentiel entre les deux éléments filaires conducteurs du capteur avec les moyens de mesure de différence de potentiel ; et
- le calcul, à partir de la différence de potentiel, d'une valeur du flux thermique à l'aide de l'unité de traitement.

## Brève description des figures

D'autres avantages et caractéristiques de l'invention apparaîtront à la lecture de la description, illustrée par les figures suivantes :

[Fig 1], déjà présentée, représente un schéma illustrant un système de mesure de flux thermique comprenant un fluxmètre à inertie selon l'état de l'art ;

[Fig 2] représente un schéma illustrant un système de mesure de flux thermique comprenant un exemple de capteur selon la présente description ;

[Fig 3] représente un schéma illustrant le fonctionnement d'un capteur pour système de mesure de flux thermique à inertie selon la présente description ;

[Fig 4] représente un schéma illustrant un principe de mesure d'une température moyenne d'un élément calorimétrique dans un capteur selon la présente description, au moyen d'un schéma équivalent ;

[Fig 5A] représente un schéma illustrant un thermocouple selon l'état de l'art et une partie d'un capteur selon la présente description ;

[Fig 5B] représente un graphique illustrant l'évolution des différences de potentiel générées par des thermocouples avec des coefficients de Seebeck opposés en fonction de la température ;

[Fig 6] représente un schéma illustrant un système de mesure de flux thermique à inertie comprenant un deuxième exemple de capteur selon la présente description ;

[Fig 7] représente un schéma illustrant un système de mesure de flux thermique à inertie comprenant un troisième exemple de capteur selon la présente description ;

[Fig 8] représente un schéma illustrant un système de mesure de flux thermique à inertie comprenant un quatrième exemple de capteur selon la présente description, doté en particulier d'un échangeur thermique.

## Description détaillée de l'invention

Sur les figures, les éléments ne sont pas toujours représentés à l'échelle pour une meilleure visibilité.

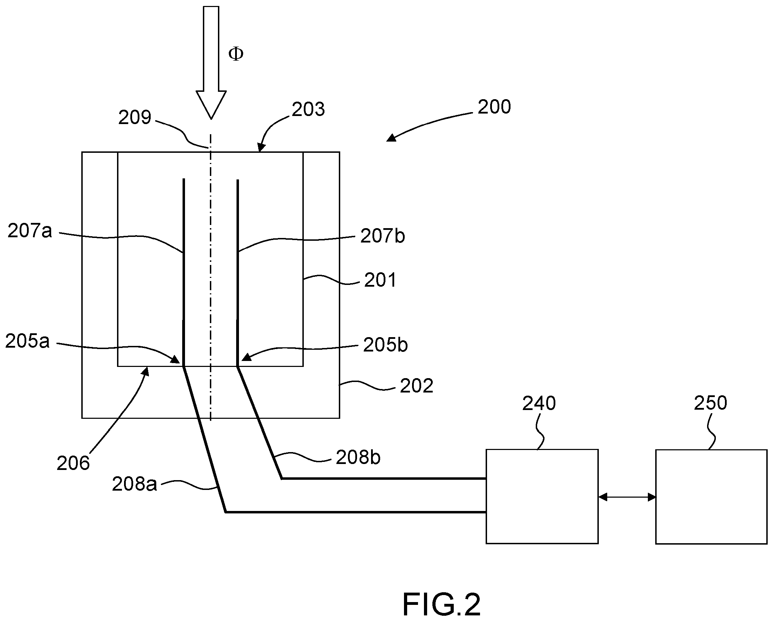

La Fig. 2 représente une vue en coupe d'un exemple de système de mesure de flux thermique à inertie comprenant un capteur 200 exposé à un flux thermique $\Phi$, des moyens 240 de mesure d'une différence de potentiel, et une unité de traitement 250.

Le capteur 200 comprend notamment un élément calorimétrique 201 ayant une face avant 203 et une face arrière 206 opposée à la face avant 203, un élément isolant thermique 202, deux éléments filaires 207a, 207b traversant l'élément calorimétrique 201 depuis la face arrière 206. Le capteur 200 est connecté électriquement aux moyens de mesure 240 par les éléments filaires 207a, 207b et, éventuellement, par l'intermédiaire de deux éléments de connexion 208a, 208b respectivement connectés électriquement aux éléments filaires 207a, 207b.

Comme cela sera décrit plus en détails par la suite, lorsque le capteur 200 est soumis à un flux thermique, le capteur 200 produit, par effet Seebeck, une différence de potentiel qui est mesurée par les moyens 240 de mesure de différence de potentiel. Ladite différence de potentiel est alors transmise à l'unité de traitement 250 qui calcule une valeur de flux thermique.

De façon générale, les moyens 240 de mesure de différence de potentiel peuvent comprendre un voltmètre et une unité de mise en forme du signal électrique mesuré par le voltmètre, ladite unité de mise en forme comprenant par exemple un amplificateur de tension.

Dans la présente description, l'unité de traitement 250 peut être un ordinateur comprenant une mémoire de stockage d'instructions et un processeur capable d'exécuter les instructions stockées dans la mémoire, en particulier de sorte à contrôler le calcul d'une valeur de flux thermique à partir d'une différence de potentiel reçue depuis les moyens 240 de mesure de différence de potentiel. L'unité de traitement 250 peut aussi avoir la forme d'un circuit intégré comprenant des composants électroniques adaptés à la mise en œuvre d'une fonction décrite dans la présente description. L'unité de traitement 250 peut également être mise en œuvre par un ou plusieurs dispositifs physiquement distincts.

Dans le capteur 200 de flux thermique, l'élément calorimétrique 201 est partiellement enveloppé par l'élément isolant 202. L'élément isolant 202 permet ainsi de définir une première portion non recouverte de l'élément calorimétrique 201 configurée pour être exposée au flux thermique à mesurer et faisant partie de ladite face avant 203, et une deuxième portion de l'élément calorimétrique 201 isolée thermiquement dudit flux thermique. Ladite première portion non recouverte de l'élément calorimétrique 201 est sensiblement plane.

Dans l'exemple illustré dans la Fig. 2, la première portion de l'élément calorimétrique configurée pour être exposée au flux thermique est confondue avec la face avant 203. Dans d'autres exemples, non représentés, la face avant 203 comprend la première portion de l'élément calorimétrique mais n'est pas confondue avec ladite première portion.

L'élément calorimétrique 201 comprend dans cet exemple un axe de révolution 209 et est un cylindre circulaire droit dont l'une des bases est la face avant 203 et l'autre base est la face arrière 206

Le capteur 200 comprend également deux éléments filaires conducteurs 207a, 207b faits en deux matériaux thermoélectriques différents et qui traversent en partie l'élément calorimétrique 201 depuis la face arrière 206 dans la direction de la longueur de l'élément calorimétrique 201. Comme cela sera expliqué en détails par la suite, le déposant a montré que les deux éléments filaires conducteurs 207a, 207b permettent de mesurer la température moyenne de l'élément calorimétrique 201.

Dans le système de mesure de flux thermique à inertie selon la présente description, le déposant a montré que le flux thermique Φ que l'on cherche à mesurer peut être obtenu à partir de la variation de température obtenue grâce à la variation de différence de potentiel mesurée entre les deux éléments filaires conducteurs 207a, 207b, via la formule au paragraphe suivant.

[Math 1]

$$\Phi(t) = \frac{m}{S} \cdot C_p(T) \cdot \frac{dT}{dt}$$

Dans ladite formule, m est la masse de l'élément calorimétrique 201 du capteur, S la section de la première portion exposée au flux thermique, Cp la capacité thermique à pression constante du matériau constituant ledit élément calorimétrique 201, T la température de l'élément calorimétrique 201, et t est le temps, c'est-à-dire l'instant où est effectuée la mesure de température T. Typiquement, un utilisateur acquiert une série de mesures de température (T1, T2,..., Tn) à des intervalles de temps réguliers (t, t+Δt, ..., t+n.Δt). La dérivée discrète de cette série temporelle est ensuite calculée pour obtenir une valeur expérimentale du flux thermique via l'équation précédente.

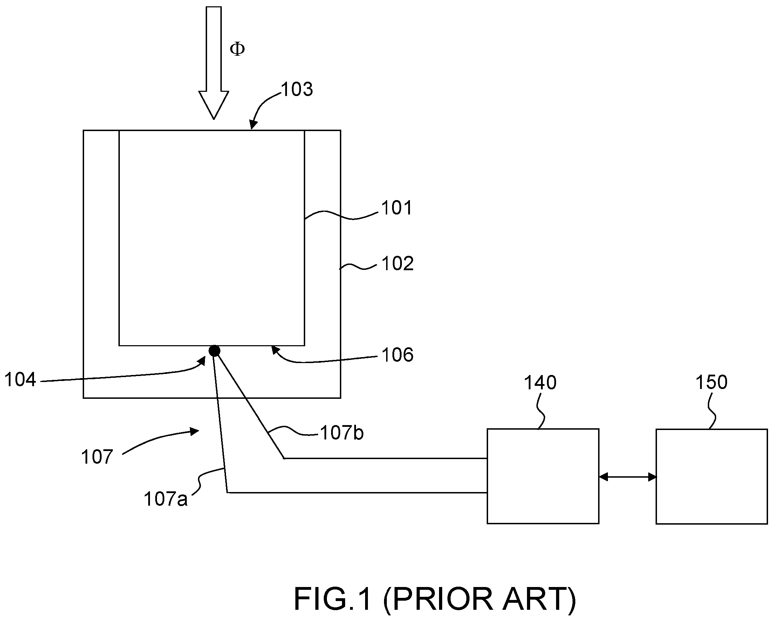

L'évolution apportée à la technologie des systèmes de mesure de flux thermique à inertie par le déposant repose en premier lieu sur la possibilité de réaliser une mesure de température traversante dans l'élément calorimétrique 201, alors qu'elle n'était auparavant possible que sur la face arrière 206. En deuxième lieu, l'évolution repose sur l'utilisation d'un thermocouple formés par deux éléments (207a, 207b) disjoints mais reliés électriquement par l'élément calorimétrique 201, au lieu d'un thermocouple 107 (illustré sur la Fig. 1) dont les deux éléments (107a, 107b) sont joints en une jonction chaude unique 104 apposée en un point de l'élément calorimétrique 101. La combinaison de ces deux aspects permet d'améliorer significativement la précision de la mesure de température de l'élément calorimétrique et donc de la valeur de flux thermique qui en est dérivée.

Dans le capteur selon la présente description, les deux éléments filaires conducteurs 207a, 207b sont disposés sensiblement parallèles à l'axe de révolution 209 de l'élément calorimétrique 201. Les deux éléments filaires conducteurs 207a, 207b traversent en partie l'élément calorimétrique 201 depuis la face arrière 206 dans une direction sensiblement orthogonale à la face avant 203 qui est également la direction dans laquelle est définie la longueur de l'élément calorimétrique 201. Dans des exemples préférés, les deux éléments filaires conducteurs 207a, 207b traversent au moins l'élément calorimétrique 201 sur environ 90% de la longueur de l'élément calorimétrique 201.

Dans l'exemple de la Fig. 2, les deux éléments filaires 207a, 207b sont disposés parallèlement l'un à l'autre et symétriquement par rapport à l'axe de révolution 209. Les deux éléments filaires 207a, 207b émanent de la face arrière 206 de l'élément calorimétrique 201 par deux orifices 205a, 205b, respectivement.

Selon certains exemples, les deux éléments filaires 207a, 207b sont reliés aux moyens 240 de mesure de différence de potentiel par des éléments de connexion 208a, 208b. Les éléments de connexion 208a, 208b peuvent être des parties des deux éléments filaires 207a, 207b qui se prolongent de façon à relier les moyens 240 de mesure de différence de potentiel.

Comme illustré dans l'exemple de la Fig. 2, les éléments de connexion 208a, 208b peuvent traverser l'élément isolant 202 afin de relier les deux éléments filaires 207a, 207b aux moyens 240 de mesure de différence de potentiel.

Bien qu'une seule paire d'éléments filaires 207a, 207b est représentée dans la Fig. 2, certains exemples de capteur selon la présente description peuvent comprendre plusieurs paires d'éléments filaires 207a, 207b insérées dans l'élément calorimétrique.

Dans des exemples de réalisation, les éléments filaires 207a, 207b sont des monobrins de diamètre inférieur à environ 1 mm, par exemple de diamètre égal à environ 0.5 mm.

Selon certains exemples, les éléments filaires 207a, 207b sont insérés dans l'élément calorimétrique 201 au moyen de micro-perçages réalisées dans la longueur de l'élément calorimétrique 201. Par exemple, si les élément filaires 207a, 207b sont des monobrins de diamètre environ égale à 0.5 mm, les micro-perçages peuvent avoir un diamètre de 0.55 mm, offrant alors un léger jeu pour permettre l'insertion des élément filaires 207a, 207b dans l'élément calorimétrique 201.

Les micro-perçages peuvent par exemple être réalisés par électroérosion. Les perçages peuvent être diamétralement opposés par rapport à l'axe de révolution 209 de l'élément calorimétrique 201. Par exemple, les micro-perçages peuvent être agencés sur un cercle de diamètre égal à environ 1.5 mm qui est concentrique au diamètre de l'élément calorimétrique 201 et traverser longitudinalement l'élément calorimétrique 201. Les perçages sont ainsi parallèles entre eux sur tout leur trajet.

Les deux éléments filaires 207a, 207b sont formés de deux matériaux thermoélectriques différents. De cette manière, le déposant a montré que l'agencement des deux éléments filaires 207a, 207b traversant l'élément calorimétrique 201 forme alors un thermocouple permettant de mesurer la température de l'élément calorimétrique. Les deux matériaux thermoélectriques utilisés dans le capteur 200 peuvent varier mais sont choisis de préférence parmi les couples de matériaux généralement utilisés dans les thermocouples de type K, de type J, de type E ou de type N.

Ainsi, dans le cas du type K, l'un des matériaux des deux élément filaires 207a, 207b est un alliage nickel-chrome (chromel) tandis que l'autre matériau est un alliage de nickel-aluminium (alumel). Les deux matériaux choisis peuvent aussi être un couple de matériaux généralement utilisés pour former d'autres types de thermocouples, par exemple, des thermocouples de type B, R, S, T, G, C, D.

L'élément isolant 202 est de préférence une céramique. En particulier, il peut s'agir d'une céramique isolante poreuse à base d'alumine ($Al_2O_3$) préparée sous forme liquide et injectée entre l'élément calorimétrique et son support (non illustré dans la Fig. 2). Lors de la réalisation d'une telle céramique, une attention particulière est portée à l'absence d'air piégé qui pourrait causer des cavités au sein de l'élément isolant 202. Au besoin, selon certains exemples, le processus de fabrication de la céramique peut comprendre, avant durcissement, un dégazage sous cloche à vide. Une fois la céramique durcie, un complément de céramique fraîche peut être effectué pour compenser un éventuel rétreint en face avant du capteur. Une fois durcie, la céramique peut être polie au grain fin (par exemple de type 240) pour être parfaitement alignée avec la face avant 203 de l'élément calorimétrique 201.

Selon un ou plusieurs exemples, l'élément isolant 202 est assemblé avec l'élément calorimétrique 201 par coulage en place dans un support comprenant l'élément calorimétrique 201, par injection sous pression, par usinage et insertion ajustée dans ledit support, par frittage en place, par fabrication *in situ* par méthode additive ou par tout autre procédé connu de la personne qualifiée.

L'élément calorimétrique 201 comprend un matériau dont les propriétés thermiques (par exemple la conductivité thermique et la capacité thermique à pression constante) sont connues et peuvent être exprimées par des équations fonctions de la température de l'élément calorimétrique 201. Selon un exemple préféré, l'élément calorimétrique 201 est fait en cuivre. Dans l'exemple illustré dans la Fig.2, l'élément calorimétrique 201 est un cylindre circulaire droit caractérisé par l'axe de révolution 209. La section transversale de l'élément calorimétrique 201 apparaît donc comme rectangulaire dans la vue en coupe de la Fig. 2 et la face avant 203 est représentée par un bord rectiligne car il s'agit d'une surface plane.

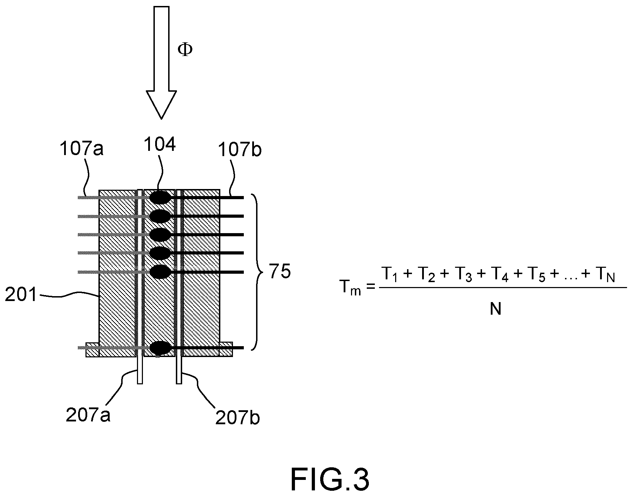

Selon d'autres exemples, l'élément calorimétrique 201 peut être un cône tronqué dont la base fait office de face arrière 206 et dont le côté opposé à la base fait office de face avant 203 ou un cylindre épaulé au niveau de la face avant de sorte à avoir une face avant 203 d'aire plus faible que la section moyenne du cylindre. Ces deux géométries alternatives permettent d'allonger la durée de mesure sans changer le matériau formant l'élément calorimétrique 201. La Fig. 3 représente un schéma de principe d'un capteur pour système de mesure de flux thermique à inertie selon la présente description comprenant un élément calorimétrique 201 traversé par deux éléments 207a, 207b d'un thermocouple.

Du fait de la mesure traversante et des éléments 207a, 207b disjoints du thermocouple, la différence de potentiel due à l'effet Seebeck apparaissant entre les éléments 207a, 207b correspond à la température moyenne Tm de l'élément calorimétrique 201 sur la longueur traversée. Un tel agencement se comporte donc comme si une multitude 75 de thermocouples (107a, 107b) à jonction unique 104 étaient répartis sur la longueur de l'élément calorimétrique 201, générant ainsi une moyenne exacte de la température de l'élément calorimétrique 201 sur la longueur. Par moyenne exacte, il est entendu que la température obtenue est une moyenne continue des températures sur toute la longueur traversée de l'élément calorimétrique 201 et non une moyenne discrète, comme représenté schématiquement sur la Fig. 3 à titre explicatif.

Par conséquent, le capteur pour système de flux thermique selon la présente description permet de mesurer la température de l'élément calorimétrique 201 en plusieurs points répartis dans la longueur de l'élément calorimétrique 201, ce qui rend possible, par exemple, la prise en compte de gradient de température au sein de l'élément calorimétrique 201. De tels gradients sont par exemple dus à un flux thermique fort sur la face avant 203 de l'élément calorimétrique 201 provoquant des inhomogénéités de température au sein de l'élément calorimétrique 201.

Par contraste, les fluxmètres selon l'état de l'art présentent l'inconvénient majeur de ne mesurer la température de l'élément calorimétrique qu'en un seul point, et ne peuvent donc pas tenir compte d'un éventuel gradient de température dans l'élément calorimétrique, ce qui diminue la précision de tels fluxmètres.

**Dimensionnement de l'élément calorimétrique**

Dans des exemples de réalisation préférés, l'élément calorimétrique 201 est dimensionné pour respecter au moins deux critères généralement antagonistes, présentés ci-après.

**Hypothèse du milieu thermiquement mince**

D'une part, l'élément calorimétrique 201 peut être dimensionné de telle sorte que sa température est quasi-uniforme lorsqu'il est soumis à un flux thermique, ce qui permet de le considérer comme « thermiquement mince » et de pouvoir, de ce fait, utiliser la théorie de la thermodynamique pour calculer une valeur du flux thermique à partir de la différence de potentiel dû à l'élévation de température de l'élément calorimétrique 201. Ce premier critère entraîne en pratique une longueur maximale pour l'élément calorimétrique au-delà de laquelle l'élément calorimétrique ne peut plus être considéré comme thermiquement mince. Le déposant a montré qu'il est possible de déterminer ladite longueur maximale de l'élément calorimétrique 201 en utilisant un nombre adimensionné comprenant des paramètres du capteur et des conditions expérimentales de mesure du flux thermique. En particulier, le déposant a montré que, lorsque le nombre adimensionné à prendre en compte est inférieur à environ 0,1, alors l'élément calorimétrique 201 peut être considéré comme un milieu thermiquement mince.

Le nombre adimensionné à prendre en compte dépend du type de flux thermique à mesurer par le capteur.

Dans le cas où le flux thermique à mesurer est un flux sensiblement convectif, le nombre adimensionné à prendre en compte est le nombre de Biot.

Le nombre de Biot est défini par la formule au paragraphe suivant.

[Math 2]

$$Bi = \frac{h.H}{\lambda}$$

Dans la formule précédente, h est un coefficient de convection dans les conditions de mesure, H la longueur de l'élément calorimétrique 201, et $\lambda$ la conductivité thermique du matériau formant l'élément calorimétrique 201.

Dans le cas où le flux thermique à mesurer est un flux sensiblement radiatif, le nombre adimensionné à prendre en compte est le nombre de rayonnement, $N_R$.

Le nombre de rayonnement est défini par la formule au paragraphe suivant.

[Math 3]

$$N_R = \frac{\sigma.T_{gaz}^{\;4}.H}{\lambda.(T_{gaz} - T_{ini})}$$

Dans la formule précédente, $\sigma$ est la constante de Stefan-Boltzmann, $T_{gaz}$ est la température de l'environnement extérieur au capteur, H la longueur de l'élément calorimétrique, $\lambda$ est la conductivité thermique du matériau formant l'élément calorimétrique 201 et $T_{ini}$ est la température initiale (avant mesure) de l'élément calorimétrique 201.

Dans le cas où le flux thermique est un flux dit « flux total » comprenant à la fois une contribution radiative et une contribution convective, le nombre adimensionné à prendre en compte est la somme du nombre de Biot et du nombre de rayonnement.

**Résistance du matériau à la fusion**

D'autre part, afin de se prémunir de toute dégradation irréversible de l'élément calorimétrique 201, on pourra chercher à ce que la température atteinte à l'instant final de mesure du flux thermique ne dépasse pas la température de fusion de l'élément calorimétrique 201. Ce second critère entraîne en pratique une longueur minimale pour l'élément calorimétrique 201 pour un matériau donné, en dessous de laquelle l'élément calorimétrique risque de fondre pendant la mesure de flux thermique.

Le déposant a montré que la longueur minimale de l'élément calorimétrique peut être déterminée à partir d'un bilan énergétique faisant intervenir des paramètres physiques de l'élément calorimétrique et des paramètres de la mesure de flux thermique, lesdits paramètres comprenant en particulier :

- la capacité thermique à pression constante de l'élément calorimétrique et la dépendance de cette capacité thermique avec la température, c'est-à-dire la fonction $C_p(T)$ ;
- la masse de l'élément calorimétrique (m), qui dépend en particulier de la masse volumique ($\rho$) de l'élément calorimétrique et du volume de l'élément calorimétrique ;
- la température initiale, $T_{ini}$, de l'élément calorimétrique, c'est-à-dire avant la mesure, par exemple 20°c pour une température ambiante classique ;

- la température finale, $T_{fin}$, acceptable de l'élément calorimétrique, c'est-à-dire une température strictement inférieure à la température de fusion de l'élément calorimétrique. Il est en particulier possible de définir une marge thermique de sécurité, par exemple environ 10%, afin d'assurer une température finale inférieure à environ 90% de la température de fusion de l'élément calorimétrique et ainsi assurer la robustesse du capteur.
- le flux maximal moyen, $\Phi_{moy}$, devant être mesuré par le capteur, ceci est par exemple un flux de l'ordre de 8 MW/m² ; et
- la durée maximale de mesure, $\Delta t$, c'est-à-dire le temps maximum pendant lequel le capteur sera exposé au flux thermique pour mesurer le flux thermique.

Le déposant a prouvé que ledit bilan thermique donne, en particulier, dans le cas d'un élément calorimétrique qui est un cylindre circulaire droit, une longueur minimale de l'élément calorimétrique s'exprimant selon la formule au paragraphe suivant.

[Math 4]

$$H_{min} = \frac{\Phi_{moy} . \Delta t}{\rho . C_{p,av} . \left( T_{fin} - T_{ini} \right)}$$

Dans la formule précédente, $C_{p,av}$ est une moyenne intégrale de la capacité thermique à pression constante de l'élément calorimétrique ayant pour borne inférieure la température initiale, $T_{ini}$, de l'élément calorimétrique et pour borne finale la température finale, $T_{fin}$, de l'élément calorimétrique. Le déposant a observé que d'autres types de moyennes (par exemple la demi-somme des capacités thermiques à la température finale et à la température initiale) peuvent être utilisés mais que la moyenne intégrale est particulièrement avantageuse du fait de sa simplicité de calcul.

A titre d'exemple, lorsque le capteur est dimensionné pour mesurer un flux thermique sensiblement convectif environ égal à 8 MW/m² provenant d'une source de gaz à 2500°C pendant une durée au moins égale à environ 5 secondes, avec une température ambiante initiale d'environ 20°C, et que l'élément calorimétrique est un cylindrique circulaire droit en cuivre de masse volumique environ égale à 8920 kg/m³ (cuivre pur de grade CuC2), alors il est acceptable que le cylindre ait une longueur comprise entre environ 10.9 mm et environ 11.5 mm pour que, d'une part, le nombre de Biot soit sensiblement inférieur ou égal à 0.1 et que, d'autre part, la température finale atteinte n'excède pas la température de fusion de l'élément calorimétrique 201, avec une marge de sécurité de 10%.

**Dimensionnement de la face avant**

Dans l'équation [Math 4], la surface de la première portion non recouverte par l'élément isolant, qui peut dans certains exemples être confondue avec la face avant 203 de l'élément calorimétrique, n'apparaît pas. Ainsi, dans le cas d'un élément calorimétrique 201 qui est un cylindre circulaire droit, le dimensionnement de la surface de la face avant 203 de l'élément calorimétrique 201 peut en principe être choisi arbitrairement. Cependant, certaines contraintes peuvent être prises en compte pour choisir cette valeur, dont par exemple :

- la contrainte d'encombrement du capteur par rapport à l'environnement du capteur spécifiquement étudié. En particulier, il est possible de réduire la surface de la face avant 203 pour faciliter l'implantation du capteur ;
- la contrainte de fabrication et de manipulation. En particulier, une surface de la face avant 203 trop faible peut rendre la fabrication du capteur plus délicate, (du fait notamment d'une préhension moins aisée) ;
- la contrainte de minimisation des pertes thermiques. En particulier, la surface extérieure totale de l'élément calorimétrique 201 induit des pertes thermiques qui peuvent en général être réduites si la surface de la face avant 203 est réduite. Par exemple, dans le cas d'un cylindre circulaire droit, plus le diamètre du cylindre est élevé, plus la surface de révolution du cylindre est grande et plus les pertes thermiques latérales sont élevées, ce qui est néfaste pour la précision de la mesure, car lesdites pertes sont difficilement mesurables.

Par ailleurs, le dimensionnement de la surface de la face avant 203 peut aussi répondre à des conditions expérimentales particulières, par exemple l'augmentation de la durée de mesure d'un flux thermique sans volonté de changer le matériau de l'élément calorimétrique 201. Ainsi, selon certains exemples, l'élément calorimétrique 201 peut comprendre un épaulement dont l'extrémité forme la face avant 203, de sorte à réduire la surface de la face avant 203 par rapport aux dimensions de l'élément calorimétrique 201 et ainsi, pouvoir éviter une fusion trop rapide de l'élément calorimétrique 201. Par exemple, dans le cas d'un élément calorimétrique 201 qui est un cylindre circulaire droit, il est possible de réduire, par un épaulement, la surface de la face avant 203 d'un facteur 2 par rapport à la surface du cylindre pour pouvoir étendre la durée de mesure du flux thermique d'un facteur 4 sans pour autant pénaliser la condition de milieu thermiquement mince.

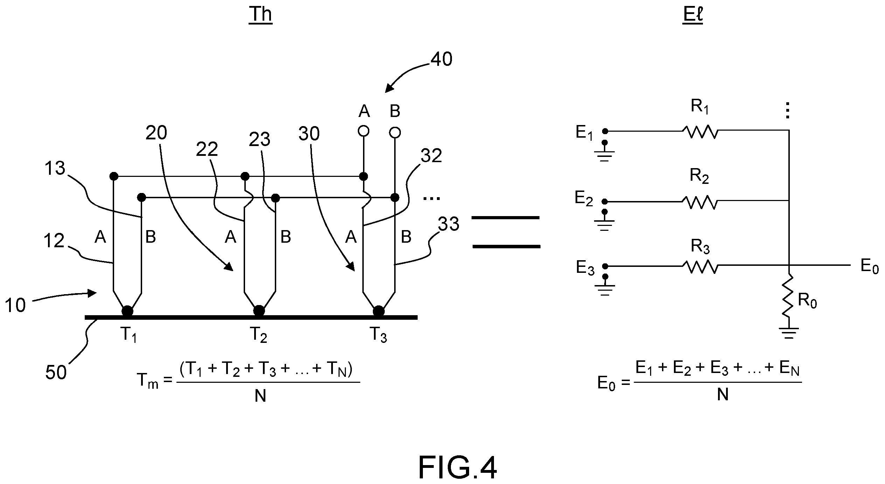

La Fig. 4 illustre le principe de la mesure traversante par une analogie thermoélectrique entre un circuit thermique (Th) comprenant des thermocouples comme illustrés sur le schéma équivalent de la Fig. 3 et un circuit électrique (El).

Dans la Fig. 4, la température moyenne longitudinale d'un élément calorimétrique rectiligne 50 est mesurée au moyen de trois thermocouples 10, 20, 30 chacun constitué de deux éléments (12, 13, 22, 23, 32, 33). Le déposant a montré que, si les thermocouples sont connectés comme représenté dans la Fig. 4, alors la différence de potentiel mesurée entre les fils A et B des extrémités 40 permet de déduire la température longitudinale moyenne, Tm, correspondant à la moyenne des températures (T1, T2, T3) qui seraient respectivement mesurées avec les thermocouples 10, 20, 30. Ceci est démontrable en particulier par analogie thermoélectrique entre le circuit thermique, Th, et le circuit électrique équivalent, El. La mesure traversante permet donc de mesurer la température longitudinale moyenne, Tm, de l'élément calorimétrique en mesurant la température à plusieurs niveaux dans l'élément calorimétrique.

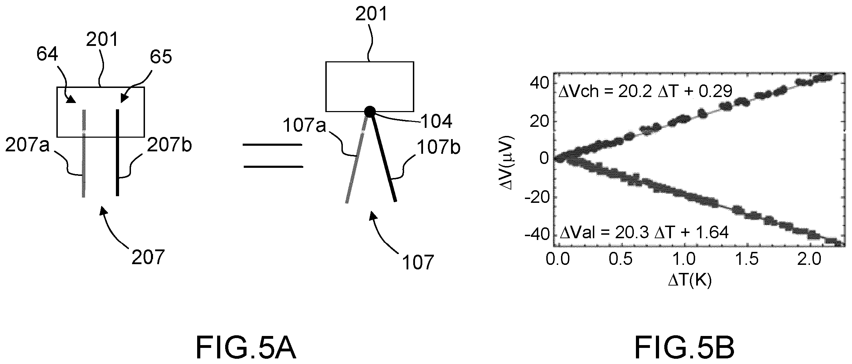

La Fig. 5A illustre un thermocouple 107 avec une jonction chaude unique 104 selon l'état de l'art et un thermocouple 207 formé par les éléments filaires (207a, 207b) du capteur selon la présente description.

Le déposant a montré qu'il est possible de mesurer la température d'un élément calorimétrique 201 au moyen d'un thermocouple 207 à agencement particulier dont les deux éléments 207a, 207b ne sont pas directement reliés de façon mécanique par une unique jonction chaude mais sont reliés par l'intermédiaire de l'élément calorimétrique 201. Cet agencement particulier comprend donc deux jonctions chaudes 64, 65 car il y a une jonction entre l'élément calorimétrique 201 et chacun des deux éléments 207a, 207b du thermocouple 207.

Afin de pouvoir mesurer une température de l'élément calorimétrique 201 au moyen d'un tel agencement, il est utile que l'élément calorimétrique 201 conduise suffisamment l'électricité. A cet effet, le déposant a observé qu'un élément calorimétrique ayant une conductivité électrique supérieure ou égale à environ $10^5$ S/m, préférentiellement $10^7$ S/m est satisfaisant pour pouvoir mesurer la température de l'élément calorimétrique 201.

Le déposant a montré qu'un tel agencement est équivalent à l'agencement généralement utilisé dans l'état de l'art dans lequel les deux éléments, 107a, 107b sont directement reliés en une jonction unique 104 qui est placée en contact avec un point de l'élément calorimétrique 201 au niveau duquel la température est mesurée. Ladite équivalence est due à la compensation des contributions de l'élément calorimétrique aux effets Seebeck des deux jonctions 64, 65. En particulier, du fait du signe opposé des coefficients Seebeck des deux jonctions 64, 65.

La Fig. 5B représente un graphique comprenant des données expérimentales montrant un exemple d'évolution de la différence de potentiel apparaissant via l'effet Seebeck pour chacune des deux jonctions 64, 65, en fonction d'une élévation de température de l'élément calorimétrique 201. Les données correspondent à un cas dans lequel l'élément calorimétrique 201 est en cuivre et où les deux éléments 207a, 207b sont du chromel et de l'alumel, respectivement. La Fig. 5B montre en particulier que les différences de potentiel apparaissant à chaque jonction 64, 65 sont opposées et sensiblement égales en valeur absolue de sorte qu'elles se compensent en majeure partie.

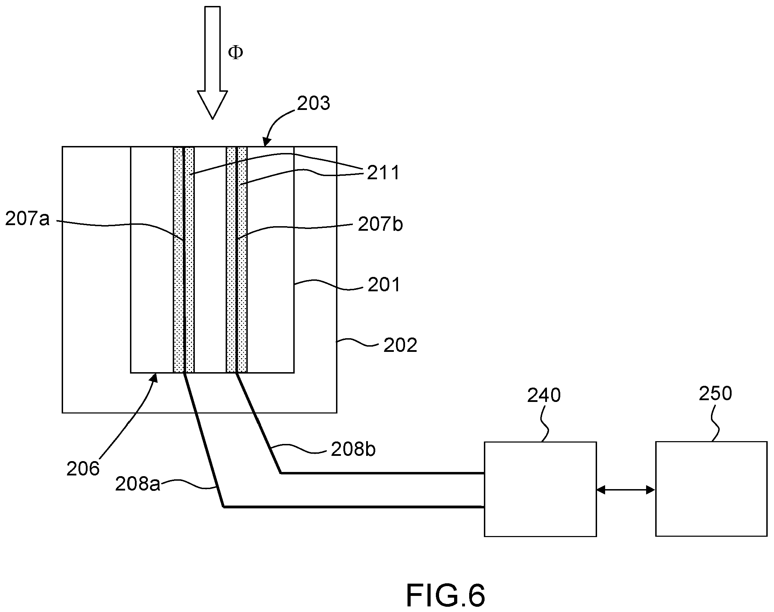

La Fig. 6 représente un exemple de capteur pour système de mesure de flux thermique à inertie selon la présente description. En particulier, comme illustré dans cet exemple, les deux éléments filaires 207a, 207b peuvent traverser l'intégralité de la longueur de l'élément calorimétrique 201 de sorte à affleurer la face avant 203 de l'élément calorimétrique 201.

De plus, comme illustré dans l'exemple de capteur représenté dans la Fig. 6, les deux éléments filaires 207a, 207b peuvent chacun être enrobés d'un matériau de liaison 211 assurant un contact mécanique entre les deux éléments filaires 207a, 207b et l'élément calorimétrique 201.

De préférence, ledit matériau de liaison 211 possède une conductivité électrique supérieure ou égale à environ $10^6$ S/m et/ou une conductivité thermique supérieure ou égale à environ 200 W/(m.K), de sorte à assurer un contact électrique et thermique entre les éléments filaires 207a, 207b et l'élément calorimétrique 201.

Selon certains exemples, les éléments filaires 207a, 207b sont implantés dans l'élément calorimétrique 201 par brasure de sorte que le rôle de matériau de liaison 211 est assuré par la pâte de brasure, par exemple une pâte comprenant de l'argent.

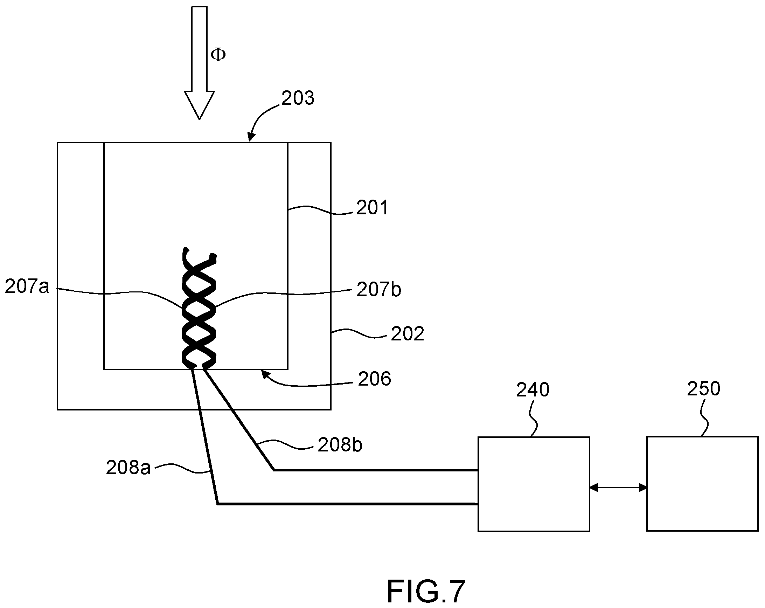

Avant la brasure, la pâte pour brasure est généralement injectée au sein des micro-perçages à l'aide d'une seringue munie d'une aiguille. On vérifie la présence d'un excès de pâte en sortie des canaux, afin de s'assurer que les micro-perçages sont saturés en pâte. Les éléments filaires 207a, 207b (par exemple l'un composé de chromel et l'autre d'alumel) sont insérés dans les micro-perçages par la face arrière 206 de l'élément calorimétrique 201, jusqu'à dépasser légèrement de la face avant 203. L'opération de brasure est ensuite réalisé en chauffant au rouge l'élément calorimétrique, par exemple à l'aide d'une torche de type « Oxy-butane ». Durant le chauffage, la pâte à l'argent migre par capillarité au sein des micro-perçages et mouille de manière sensiblement uniforme à la fois l'élément calorimétrique 201 et les éléments filaires 207a, 207b. Après refroidissement, la face avant de l'élément calorimétrique (exposée au flux) est généralement polie au grain fin (par exemple de type P240) pour obtenir une très bonne réflectivité et également pour araser les extrémités des éléments filaires 207a, 207b pouvant dépasser de la surface de la face avant 203. L'exemple illustré dans la Fig. 7, montre que les éléments filaires peuvent dans certains cas être parallèles l'un à l'autre mais non-rectilignes. En particulier, les deux éléments filaires 207a, 207b peuvent décrire, à la manière de deux brins d'acide désoxyribonucléique (ADN), deux hélices mathématiquement conformes ou sensiblement conformes.

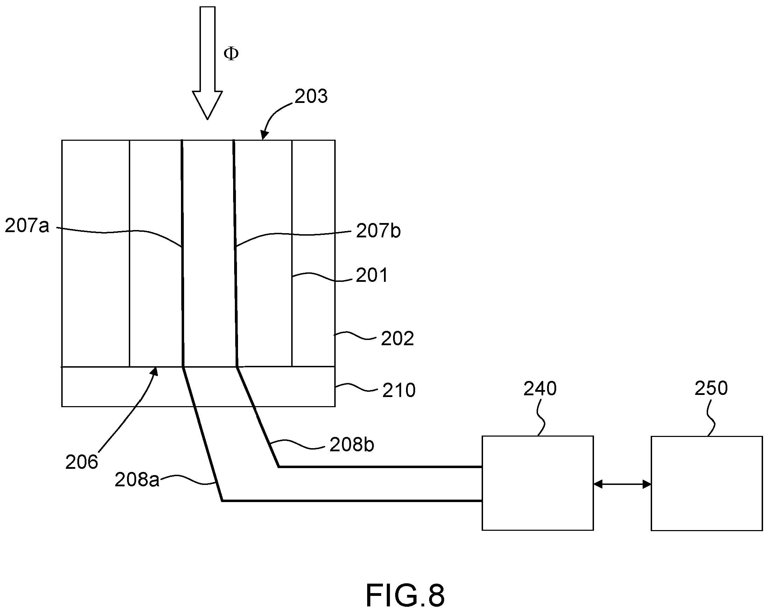

Dans l'exemple illustré dans la Fig. 8, le capteur pour système de mesure de flux thermique à inertie comprend un échangeur thermique 210 agencé en contact avec au moins une partie de la face arrière 206 de l'élément calorimétrique 201. L'échangeur thermique est configuré pour évacuer de façon contrôlée et prédéterminée de l'énergie thermique de l'élément calorimétrique 201. Ainsi, il est possible de prolonger une mesure de flux thermique pendant un temps long sans risquer d'atteindre une température dans l'élément calorimétrique 201 qui dépasse la température de fusion.

En particulier, selon certains exemples, l'échangeur thermique 210 est un échangeur liquide dont la température d'entrée et le débit-masse sont connus et maîtrisés, ou mesurés durant le fonctionnement du capteur. Le déposant a montré qu'il est alors possible, en mesurant la température de sortie de l'échangeur, de déterminer le flux thermique incident en réalisant un bilan d'énergie de l'élément calorimétrique 201. Dans ce cas, comme illustré dans la Fig. 8, aucun élément isolant thermique n'est généralement appliqué sur la face arrière 206 de l'élément calorimétrique 201, la face arrière 206 devant au contraire évacuer efficacement le flux de chaleur.

Selon certains exemples, y compris les exemples décrits précédemment, la face avant 203 peut être recouverte d'un revêtement configuré pour réaliser différentes fonctions.

En particulier, le revêtement peut être un film absorbant configuré pour absorber la contribution radiative du flux incident, et ainsi permettant d'assurer la mesure du flux total comprenant la somme des contributions radiative et convective au flux thermique. Par exemple, un tel film absorbant peut être une peinture de couleur « noir mat » haute température dotée d'une absorptivité moyenne dans l'infrarouge de 0.95 et d'une température maximale admissible de 700°C. Celle-ci est en général déposée manuellement par un pinceau de précision à pointe ronde sur la face avant 203 de l'élément calorimétrique 201. La surface périphérique de l'élément isolant 202 ne doit en revanche pas être revêtue de peinture.

Le revêtement peut aussi être un film réflecteur configuré pour réfléchir la contribution radiative du flux incident, et ainsi faciliter la mesure de la contribution convective du flux thermique. Par exemple, un tel film réflecteur peut être configuré pour conférer à la face avant 203 une émissivité inférieure à environ 0.1, de préférence inférieure à environ 0.05. Selon certains exemples, non illustrés dans les figures, le capteur peut aussi comprendre un hublot configuré pour neutraliser la contribution convective du flux thermique mais pour transmettre la contribution radiative du flux thermique. En effet, le hublot forme une barrière mécanique entre le flux thermique extérieur au capteur et la face avant 203 de l'élément calorimétrique 201 de sorte à empêcher un mouvement de matière lié audit flux thermique au niveau de la face avant 203. Lorsqu'un capteur selon la présente description est muni d'un tel hublot, il est possible de mesurer uniquement la contribution radiative du flux thermique, car seule cette contribution atteint la face avant 203, la contribution convective étant neutralisé par le hublot.

Par exemple, un tel hublot a généralement une transmission supérieure à environ 90% concernant les rayonnements électromagnétiques ayant une longueur d'onde comprise entre environ 0,7 micromètres et environ 5 micromètres. Bien que des hublots avec une transmission supérieure à 90% soit préférés, il est possible d'utiliser des hublots avec une transmission supérieure à 70%, il suffit alors de mesurer la transmission en laboratoire au préalable pour ensuite pouvoir corriger en conséquence les mesure de flux thermique obtenues en présence dudit hublot.

Le hublot est disposé entre le flux thermique et la face avant 203, mais n'est pas en contact avec la face avant 203 pour éviter un transfert d'énergie thermique par conduction depuis le hublot vers la face avant 203. Le hublot comprend par exemple du saphir. La forme du hublot peut être une plaque circulaire d'une épaisseur d'environ 0,5 à 1,5 mm.

Un tel hublot est en général avantageusement recouvert d'un film absorbant comme décrit précédemment, afin d'améliorer la mesure de la contribution radiative du flux thermique par le capteur.

Bien que décrits à travers un certain nombre d'exemples de réalisation, le procédé et les capteurs pour système de mesure de flux thermique à inertie selon la présente description comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

**Références**

[Réf 1] WO02/18890 A2, HEAT SENSING DEVICE FOR THERMAL AND SKIN BURN EVALUATION, Hamouda et al., published on March 7th, 2002

[Réf 2] JAYAPRAKASH, C., KUMAR, P. Pratheesh, SRINIVAS, J., et al. Development of copper slug calorimeter for heat flux measurements. In : Proc. Asian Congr. Gas Turbines (ACGT). 2016. p. 1-6

[Réf. 3] FR 2 706 610

**Revendications**

1.  Capteur (200) pour système de mesure de flux thermique à inertie comprenant :

    - un élément calorimétrique (201) de longueur donnée, comprenant une face avant (203) et une face arrière (206) opposée à la face avant (203), ledit élément calorimétrique (201) ayant une conductivité thermique supérieure ou égale à environ 100 W/(m.K) et une conductivité électrique supérieure ou égale à environ $10^5$ S/m ;
    - un élément isolant thermique (202) recouvrant en partie ledit élément calorimétrique (201) de sorte à définir une première portion non recouverte de l'élément calorimétrique, sensiblement plane, configurée pour être exposée à un flux thermique à mesurer et faisant partie de ladite face avant (203), et une deuxième portion recouverte de l'élément calorimétrique (201) isolée thermiquement dudit flux thermique ; et
    - deux éléments filaires conducteurs (207a, 207b) **caractérisé en ce que** l'élément calorimetrique est massif et **en ce que** les deux éléments filaires conducteurs traversent, depuis la face arrière (206), au moins en partie ledit élément calorimétrique (201) et sont agencés de telle sorte à ne pas être en contact mécanique l'un avec l'autre mais à être en contact électrique par l'intermédiaire dudit élément calorimétrique (201) sur au moins une partie de la longueur de l'élément calorimétrique (201), les deux éléments filaires conducteurs étant faits dans deux matériaux thermoélectriques différents.

2.  Capteur (200) selon la revendication 1, dans lequel lesdits deux éléments filaires conducteurs (207a, 207b) traversent l'élément calorimétrique (201) sur au moins environ 30% de la longueur de l'élément calorimétrique.

3.  Capteur (200) selon l'une quelconque des revendications précédentes, dans lequel lesdits deux éléments filaires conducteurs (207a, 207b) traversent l'élément calorimétrique (201) en totalité de sorte à affleurer ladite première portion.

4.  Capteur (200) selon l'une quelconque des revendications, dans lequel lesdits deux éléments filaires conducteurs (207a, 207b) sont disposés de façon sensiblement parallèle.

5.  Capteur (200) selon l'une quelconque des revendications précédentes, dans lequel ledit élément calorimétrique (201) présente une forme cylindrique, une forme conique ou une forme cylindro-conique et comprend un axe de révolution (209), ledit axe de révolution (209) étant sensiblement normal à ladite première portion.

6.  Capteur (200) selon la revendication 5, dans lequel lesdits deux éléments filaires conducteurs (207a, 207b) sont disposés de façon sensiblement parallèle audit axe de révolution (209) et symétriquement par rapport audit axe de révolution (209).

7.  Capteur (200) selon l'une quelconque des revendications précédentes, dans lequel ledit élément calorimétrique (201) comprend un matériau ayant :

    - une capacité thermique à pression constante supérieure ou égale à environ 120 J/(kg.K) à 25°C ; et/ou
    - une température de fusion supérieure ou égale à environ 500°C ; et/ou
    - une masse volumique supérieure ou égale à environ 2500 kg/m$^3$.

8.  Capteur (200) selon l'une quelconque des revendications précédentes, dans lequel lesdits deux matériaux thermoélectriques différents sont un couple de matériaux choisis parmi chromel/constantan, fer/constantan, chromel/alumel, nicrosil/nisil, nickel-molybdène/nickel-cobalt, platine-rhodium/platine, tungstène-rhénium/tungstène.

9.  Capteur (200) selon l'une quelconque des revendications précédentes, comprenant en outre un matériau de liaison (211) enrobant chacun des deux éléments filaires conducteurs (207a, 207b) pour assurer un contact mécanique entre chacun desdits deux éléments filaires conducteurs (207a, 207b) et ledit élément calorimétrique (201).

10. Capteur (200) selon l'une quelconque des revendications précédentes, comprenant en outre un échangeur thermique (210) en contact avec une partie de l'élément calorimétrique (201), ledit échangeur thermique (210) étant configuré pour refroidir l'élément calorimétrique (210).

11. Capteur (200) selon l'une quelconque des revendications précédentes, dans lequel ladite première portion est recouverte au moins partiellement d'un film réflecteur comprenant une émissivité inférieure ou égale à environ 0.1 dans une gamme de longueur d'onde comprise entre environ 0,5 micromètres et environ 10 micromètres.

12. Capteur (200) selon l'une quelconque des revendications 1 à 10, dans lequel ladite première portion est recouverte au moins partiellement d'un film absorbant comprenant une émissivité supérieure ou égale à environ 0.9 dans une gamme de longueur d'onde comprise entre environ 0.5 micromètres et environ 10 micromètres.

13. Capteur selon la revendication 12, comprenant en outre un hublot configuré pour être disposé entre le flux thermique à mesurer et ledit élément calorimétrique (201) mais n'étant pas en contact mécanique avec ledit film absorbant.

14. Système de mesure de flux thermique à inertie comprenant :

- un capteur (200) selon l'une quelconque des revendications précédentes ;
- des moyens (240) de mesure d'une différence de potentiel entre les deux éléments filaires conducteurs (207a, 207b) lorsque la première portion de l'élément calorimétrique est exposée à un flux thermique à mesurer ; et
- une unité de traitement (250) configurée pour calculer, à partir de ladite différence de potentiel, une valeur dudit flux thermique.

15. Procédé de mesure d'un flux thermique au moyen d'un système selon la revendication 14 comprenant :

- l'exposition de la première portion de l'élément calorimétrique du capteur (200) au flux thermique à mesurer ;
- la mesure d'une différence de potentiel entre les deux éléments filaires conducteurs (207a, 207b) du capteur (200) avec les moyens (240) de mesure de différence de potentiel ; et
- le calcul, à partir de la différence de potentiel, d'une valeur du flux thermique à l'aide de l'unité de traitement (250).

**Patentansprüche**

1. Sensor (200) für ein Trägheits-Wärmestrommesssystem, umfassend:

- ein kalorimetrisches Element (201) mit einer bestimmten Länge, das eine vordere Fläche (203) und eine der vorderen Fläche (203) gegenüberliegende hintere Fläche (206) umfasst, wobei das kalorimetrische Element (201) eine Wärmeleitfähigkeit von größer gleich etwa 100 W/(m.K) und eine elektrische Leitfähigkeit von größer gleich etwa $10^5$ S/m aufweist;
- ein thermisches Isolierelement (202), das das kalorimetrische Element (201) teilweise so bedeckt, dass ein erster nicht bedeckter Abschnitt des kalorimetrischen Elements, der im Wesentlichen flach und so eingerichtet ist, dass er einem zu messenden Wärmestrom ausgesetzt ist, und der Teil der vorderen Fläche (203) ist, und ein zweiter bedeckter Abschnitt des kalorimetrischen Elements (201) definiert wird, der thermisch von dem Wärmestrom isoliert ist; und
- zwei leitende Drahtelemente (207a, 207b), **dadurch gekennzeichnet, dass** das kalorimetrische Element massiv ist und dass die beiden leitenden Drahtelemente von der hinteren Fläche (206) mindestens teilweise das kalorimetrische Element (201) durchqueren und so angeordnet sind, dass sie in keinem mechanischen Kontakt miteinander stehen, sondern über das kalorimetrische Element (201) über mindestens einen Teil der Länge des kalorimetrischen Elements (201) in elektrischem Kontakt miteinander stehen, wobei die beiden leitenden Drahtelemente aus zwei verschiedenen thermoelektrischen Materialien bestehen.

2. Sensor (200) nach Anspruch 1, wobei die beiden leitenden Drahtelemente (207a, 207b) das kalorimetrische Element (201) über mindestens etwa 30 % der Länge des kalorimetrischen Elements durchqueren.

3. Sensor (200) nach einem der vorhergehenden Ansprüche, wobei die beiden leitenden Drahtelemente (207a, 207b) das kalorimetrische Element (201) vollständig durchqueren, so dass sie bündig mit dem ersten Abschnitt sind.

4. Sensor (200) nach einem der Ansprüche, wobei die beiden leitenden Drahtelemente (207a, 207b) im Wesentlichen parallel angeordnet sind.

5. Sensor (200) nach einem der vorhergehenden Ansprüche, wobei das kalorimetrische Element (201) eine zylindrische Form, eine konische Form oder eine zylindrisch-konische Form aufweist und eine Drehachse (209) umfasst, wobei die Drehachse (209) im Wesentlichen normal zu dem ersten Abschnitt ist.

6. Sensor (200) nach Anspruch 5, wobei die beiden leitenden Drahtelemente (207a, 207b) im Wesentlichen parallel zu der Drehachse (209) und symmetrisch zu der Drehachse (209) angeordnet sind.

7. Sensor (200) nach einem der vorhergehenden Ansprüche, wobei das kalorimetrische Element (201) ein Material umfasst, das Folgendes aufweist:

- eine Wärmekapazität bei konstantem Druck von größer gleich etwa 120 J/(kg.K) bei 25 °C; und/oder
- eine Schmelztemperatur von größer gleich etwa 500 °C; und/oder
- eine Dichte von größer gleich etwa 2500 kg/m$^3$.

8. Sensor (200) nach einem der vorhergehenden Ansprüche, wobei die beiden verschiedenen thermoelektrischen Materialien ein Materialpaar sind, das aus Chromel/Constantan, Eisen/Constantan, Chromel/Alumel, Nicrosil/Nisil, Nickel-Molybdän/Nickel-Kobalt, Platin-Rhodium/Platin, Wolfram-Rhenium/Wolfram ausgewählt ist.

9. Sensor (200) nach einem der vorhergehenden Ansprüche, ferner umfassend ein Verbindungsmaterial (211), das jedes der beiden leitenden Drahtelemente (207a, 207b) umhüllt, um einen mechanischen Kontakt zwischen jedem der beiden leitenden Drahtelemente (207a, 207b) und dem kalorimetrischen Element (201) sicherzustellen.

10. Sensor (200) nach einem der vorhergehenden Ansprüche, ferner umfassend einen Wärmetauscher (210) in Kontakt mit einem Teil des kalorimetrischen Elements (201), wobei der Wärmetauscher (210) so eingerichtet ist, dass er das kalorimetrische Element (210) kühlt.

11. Sensor (200) nach einem der vorhergehenden Ansprüche, wobei der erste Abschnitt mindestens teilweise mit einer reflektierenden Folie bedeckt ist, die eine Emissivität von kleiner gleich etwa 0,1 in einem Wellenlängenbereich zwischen etwa 0,5 Mikrometern und etwa 10 Mikrometern umfasst.

12. Sensor (200) nach einem der Ansprüche 1 bis 10, wobei der erste Abschnitt mindestens teilweise mit einer absorbierenden Folie bedeckt ist, die eine Emissivität von größer gleich etwa 0,9 in einem Wellenlängenbereich zwischen etwa 0,5 Mikrometern und etwa 10 Mikrometern umfasst.

13. Sensor nach Anspruch 12, ferner umfassend ein Fenster, das so eingerichtet ist, dass es zwischen dem zu messenden Wärmestrom und dem kalorimetrischen Element (201) angeordnet ist, aber nicht in mechanischem Kontakt mit der absorbierenden Folie steht.

14. Trägheits-Wärmestrommesssystem, umfassend:

- einen Sensor (200) nach einem der vorhergehenden Ansprüche;
- Mittel (240) zum Messen einer Potenzialdifferenz zwischen den beiden leitenden Drahtelementen (207a, 207b), wenn der erste Abschnitt des kalorimetrischen Elements einem zu messenden Wärmestrom ausgesetzt ist; und
- eine Verarbeitungseinheit (250), die so eingerichtet ist, dass sie anhand der Potenzialdifferenz einen Wert des Wärmestroms berechnet.

15. Verfahren zum Messen eines Wärmestroms mittels eines Systems nach Anspruch 14, umfassend:

- Aussetzen des ersten Abschnitts des kalorimetrischen Elements des Sensors (200) gegenüber des zu messenden Wärmestroms;
- Messen einer Potenzialdifferenz zwischen den beiden leitenden Drahtelementen (207a, 207b) des Sensors (200) mit den Mitteln (240) zum Messen der Potenzialdifferenz; und
- Berechnen, anhand der Potenzialdifferenz, eines Wertes des Wärmestroms mithilfe der Verarbeitungseinheit (250).

**Claims**

1. Sensor (200) for a system for measuring inertial heat flux comprising:

- a calorimetric element (201) of given length, comprising a front face (203) and a rear face (206) opposite the front face (203), said calorimetric element (201) having a thermal conductivity greater than or equal to about 100 W/(m.K) and an electrical conductivity greater than or equal to about $10^5$ S/m;

**EP 4 479 716 B1**

- a thermal insulation element (202) partially covering said calorimetric element (201) so as to define a first uncovered portion of the calorimetric element, substantially planar, configured to be exposed to a heat flux to be measured and forming part of said front face (203), and a second covered portion of the calorimetric element (201) thermally insulated from said heat flux; and

- two wire-based conductive elements (207a, 207b) **characterised in that** the calorimetric element is solid and **in that** the two conductive wire elements pass through, from the rear face (206), at least partially said calorimetric element (201) and are arranged so as not to be in mechanical contact with one another but to be in electrical contact via said calorimetric element (201) over at least one portion of the length of the calorimetric element (201), the two wire-based conductive elements being made of two different thermoelectric materials.

2. Sensor (200) according to claim 1, wherein said two wire-based conductive elements (207a, 207b) pass through the calorimetric element (201) over at least about 30% of the length of the calorimetric element.

3. Sensor (200) according to any one of the preceding claims, wherein said two wire-based conductive elements (207a, 207b) pass completely through the calorimetric element (201) so as to be flush with said first portion.

4. Sensor (200) according to any one of the claims, wherein said two wire-based conductive elements (207a, 207b) are arranged in a substantially parallel manner.

5. Sensor (200) according to any one of the preceding claims, wherein said calorimetric element (201) has a cylindrical shape, a conical shape, or a cylindrical-conical shape, and comprises an axis of revolution (209), said axis of revolution (209) being substantially normal to said first portion.

6. Sensor (200) according to claim 5, wherein said two wire-based conductive elements (207a, 207b) are disposed substantially parallel to said axis of revolution (209) and symmetrically with respect to said axis of revolution (209).

7. Sensor (200) according to any one of the preceding claims, wherein said calorimetric element (201) comprises a material having:

- a thermal capacity at constant pressure greater than or equal to about 120 J/(kg.K) at 25°C; and/or
- a melting temperature greater than or equal to about 500°C; and/or
- a density greater than or equal to about 2,500 kg/m$^3$.

8. Sensor (200) according to any one of the preceding claims, wherein said two different thermoelectric materials are a pair of materials selected from chromel/constantan, iron/constantan, chromel/alumel, nicrosil/nisil, nickel-molybdenum/nickel-cobalt, platinum-rhodium/platinum, tungsten-rhenium/tungsten.

9. Sensor (200) according to any one of the preceding claims, further comprising a bonding material (211) covering each of the two wire-based conductive elements (207a, 207b) to ensure a mechanical contact between each of said two wire-based conductive wire elements (207a, 207b) and said calorimetric element (201).

10. Sensor (200) according to any one of the preceding claims, further comprising a heat exchanger (210) in contact with a portion of the calorimetric element (201), said heat exchanger (210) being configured to cool the calorimetric element (210).

11. Sensor (200) according to any one of the preceding claims, wherein said first portion is at least partially covered with a reflective film comprising an emissivity less than or equal to about 0.1 in a wavelength range between about 0.5 micrometres and about 10 micrometres.

12. Sensor (200) according to any one of claims 1 to 10, wherein said first portion is at least partially covered with an absorbent film comprising an emissivity greater than or equal to about 0.9 within a wavelength range of about 0.5 micrometres and about 10 micrometres.

13. Sensor according to claim 12, further comprising a window configured to be disposed between the heat flux to be measured and said calorimetric element (201), but not being in mechanical contact with said absorbent film.

14. System for measuring inertial heat flux comprising:

- a sensor (200) according to any one of the preceding claims;
- means (240) for measuring a difference in potential between the two wire-based conductive elements (207a, 207b) when the first portion of the calorimetric element is exposed to a heat flux to be measured; and
- a processing unit (250) configured to calculate, from said potential difference, a value of said heat flux.

15. Method for measuring a heat flux by means of a system according to claim 14 comprising:

- exposing the first portion of the calorimetric element of the sensor (200) to the heat flux to be measured;
- measuring a potential difference between the two wired-based conductive elements (207a, 207b) of the sensor (200) with the potential difference measuring means (240); and
- calculating, from the potential difference, a value for the heat flux using the processing unit (250).

FIG.1 (PRIOR ART)

FIG.2

EP 4 479 716 B1

EP 4 479 716 B1

$$T_m = \frac{T_1 + T_2 + T_3 + T_4 + T_5 + \ldots + T_N}{N}$$

FIG.3

Th

El

$$T_m = \frac{(T_1 + T_2 + T_3 + ... + T_N)}{N}$$

$$E_0 = \frac{E_1 + E_2 + E_3 + ... + E_N}{N}$$

FIG.4

EP 4 479 716 B1

FIG.5B

FIG.5A

FIG.6

EP 4 479 716 B1

FIG.7

EP 4 479 716 B1

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0218890 A2

- FR 2706610

**Littérature non-brevet citée dans la description**

- **JAYAPRAKASH, C.** ; **KUMAR, P. PRATHEESH** ; **SRINIVAS, J. et al.** Development of copper slug calorimeter for heat flux measurements. *Proc. Asian Congr. Gas Turbines (ACGT).*, 2016, 1-6